(19) Europäisches Patentamt / European Patent Office / Office européen des brevets

(11) **EP 4 730 213 A1**

(12) **EUROPEAN PATENT APPLICATION**

(43) Date of publication:
22.04.2026 Bulletin 2026/17

(21) Application number: 25208657.4

(22) Date of filing: 14.10.2025

(51) International Patent Classification (IPC):
*G06N 10/20* (2022.01)  *G06N 10/60* (2022.01)

(52) Cooperative Patent Classification (CPC):
G06N 10/20; G06N 10/60

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 15.10.2024 US 202463707272 P

(71) Applicant: **Xanadu Quantum Technologies Inc.**
**Toronto, ON M5G 2C8 (CA)**

(72) Inventor: **MOTLAGH HAGH NEGAHDAR, Danial**
**Aurora (US)**

(74) Representative: **Hoyng Rokh Monegier B.V.**
**Rembrandt Tower, 30th Floor**
**Amstelplein 1**
**1096 HA Amsterdam (NL)**

(54) **METHODS FOR SIMULATING VIBRONIC SYSTEMS ON A QUANTUM COMPUTER**

(57)    There is described a method of simulating a vibronic system with an arbitrary number of diabatic electronic states on a quantum computer. A vibronic Hamiltonian that corresponds to a plurality of electronic states and a plurality of vibrational modes of the vibronic system is decomposed into a plurality of block diagonalizable elements. The exponential of each block diagonalizable element is implemented on a qubit register on the quantum computer. The exponentials of the plurality of block diagonalizable elements in the qubit registers are then combined to derive an exponential of the vibronic Hamiltonian to be simulated.

100

**FIG. 1**

## Description

### BACKGROUND

The present disclosure is related to quantum technology, and in particular to the use of quantum computers to simulate the vibronic properties of molecular systems.

The vibronic effect is the result of the interaction between the oscillatory motion of the atomic nuclei, also referred to as the vibrational motion, and the electron motion within a molecule. Accurate modeling of the vibronic effect is crucial to the understanding of important non-adiabatic excited state processes in photochemistry.

The Born-Oppenheimer (BO) approximation may be used to model the molecular dynamics of a molecule. However, the BO approximation treats the molecular energy as a sum of independent terms, including the electronic energy, vibrational energy, rotational energy, and nuclear spin energy, and neglects the coupling between vibrational modes and electronic states. Hence, in some instances, the BO approximation fails to accurately model molecular systems, such as near conical intersections where strong non-adiabatic couplings between the molecular electronic states are present.

The advent of quantum computing technology could significantly reduce the computational cost of any simulation of a quantum mechanical system by exploiting the quantum nature of the device itself. There have been attempts to develop a feasible methodology of simulating vibronic dynamics on quantum computers. For example, in "Nonadiabatic Molecular Quantum Dynamics with Quantum Computer" by P. J. Ollitrault et al., arXiv:2006.09405 (2020), the authors proposed an algorithm for vibronic dynamics simulation on quantum computers. However, the method described in this paper is limited in scope as it is only capable of simulating two diabatic electronic states and only with harmonic potentials. In a further example, in "Digital Quantum Computation of Fermion-Boson Interacting System" by A. Macridin et al., arXiv:1805.09928 (2018), the authors provide an algorithm for simulating fermion-boson interacting systems. However, the method described therein does not deal with diabatic electronic states and only considers fermions in the second quantization. Additionally, the method described in the Macridin paper suffers from computational inefficiency due to scaling considerations. Indeed, to implement a bosonic Hamiltonian over M modes with up to d-body mode-mode interactions, the algorithm described in the Macridin paper scales as $O(M^d \times (\log N)^d)$, where $N$ is the number of grid points per mode.

Thus, there exists a need for an improved method for implementing vibronic systems on a quantum computer.

### SUMMARY

In one aspect, the present disclosure provides a method for simulating a vibronic system on a quantum computer. In some embodiments, the method described herein may be capable of implementing vibronic Hamiltonians of an arbitrary number of diabatic electronic states. In some embodiments, the method described herein adopts a multiplexed approach where a vibronic Hamiltonian of a vibronic system is decomposed into a plurality of block diagonalizable elements with each element having a plurality of evolutions on the vibrational modes controlled by the electronic states.

In another aspect, the present disclosure provides a method that reduces the computational cost of implementing vibronic Hamiltonians of an arbitrary number of diabatic electronic states. In some embodiments, the method described herein uniquely utilizes quantum arithmetic to reduce the computational cost of the simulation from $O(N^2 \times M^d \times \log(K)^d)$ to $O(N^2 \times d^2 \times M^d \times \log(K)^2)$ for $d$-body mode-mode interactions, where $N$ is the number of electronic states and $M$ is the number of vibrational modes discretized into $K$ points. In some embodiments, the method described uses a caching methodology, implementing higher order exponential terms by caching the results of lower order terms in one or more qubit registers, thereby reducing the computational time to $O(N^2 \times d \times M^d \times \log(K)^2)$. In some embodiments, the method described herein reduces multiplexed time evolution to multiplexed data loading, further reducing the computational cost. For example, in some embodiments, the method described herein may provide a computational runtime of $O(N \times d \times M^d \times \log(K)^2)$.

In one aspect, there is provided a method for simulating a vibronic system on a quantum computer, the method comprising: identifying a vibronic Hamiltonian corresponding to a plurality of electronic states and a plurality of vibrational modes of the vibronic system; generating a plurality of block diagonalizable elements representative of the vibronic Hamiltonian; implementing, on a plurality of vibronic registers on the quantum computer corresponding to the plurality vibrational modes and an electronic register on the quantum computer corresponding to the plurality of electronic states, the exponential of each block diagonalizable element of the plurality of block diagonalizable elements; and combining the exponentials of the plurality of block diagonalizable elements.

In another aspect, there is provided a non-transitory computer-readable medium storing instructions that, when executed by a computer processor, cause the computer processor to: identify a vibronic Hamiltonian corresponding to a plurality of electronic states and a plurality of vibrational modes of the vibronic system; generating a plurality of block diagonalizable elements representative of the vibronic Hamiltonian; implement, on a plurality of vibronic registers on the quantum computer corresponding to the plurality vibrational modes and an electronic register on the quantum computer corresponding to the plurality of electronic states, the exponential of each block diagonalizable element of the plurality of block diagonalizable elements; and combine the exponentials of the plurality of block diagonalizable elements.

The method of claim 1, further comprising block diagonalizing each block diagonalizable element of the plurality of block diagonalizable elements thereby producing a plurality of block diagonalized elements, each block diagonalized element of the plurality of block diagonalized elements comprising a plurality of evolutions on the vibrational registers controlled on a state of the electronic register.

In any of the above aspects, each block diagonalizable element may comprise a plurality of terms, each term of the plurality of terms including a plurality of monomials, and any of the above aspects may further comprise: implementing, on the plurality of vibrational registers, the exponential of each monomial of the plurality of monomials; combining the exponentials of the plurality of monomials to implement the exponential of each corresponding term of the plurality of terms; and combining the exponentials of the plurality of terms to implement the exponential of each corresponding block diagonalizable element of the plurality of block diagonalizable elements.

In any of the above aspects, the implementing of the exponential of each monomial of the plurality of monomials may comprise: loading a binary representation of a coefficient of the monomial in a first qubit register; computing, using quantum arithmetic, a binary representation of a variable of the monomial in a second qubit register; applying a phase gradient operation to a product of the first qubit register and the second qubit register; and uncomputing the first qubit register and the second qubit register.

In any of the above aspects, the computing may further comprise signed multiplication between a subset of the plurality of vibrational registers, the subset corresponding to vibrational modes of the variable.

In any of the above aspects, the loading may further comprise controlling based on a state of the electronic register, thereby implementing the plurality of evolutions on the vibrational registers controlled on the state of the electronic register.

In any of the above aspects, the loading may further include: applying a first X gate on a clean ancilla qubit controlled on the state of the electronic register; performing the loading controlled on the ancilla qubit; and applying a second X gate on the ancilla qubit controlled on the state of the electronic register, thereby returning the ancilla qubit to a clean state.

In any of the above aspects, the computing may further comprise: for a variable of order d, identifying one or more cache qubit registers storing a variable having an order less than d; and implementing the variable of order d based on the one or more cache qubit registers.

In any of the above aspects, the block diagonalizing of each block diagonalizable element may be performed exclusively via Clifford gates.

In any of the above aspects, the Clifford gates may include one or more of Hadamard gates and CNOT gates.

In any of the above aspects, the vibronic Hamiltonian may comprise a kinetic component and a potential component, and the plurality of block diagonalizable elements may further comprise a first subset of the plurality of block diagonalizable elements representative of the kinetic component and a second subset of the plurality of block diagonalizable elements representative of the potential component.

In any of the above aspects, the combining may include Trotterizing the exponentials of the plurality of block diagonalizable elements.

In any of the above aspects, the combining may include: constructing block encodings of each element of the plurality of elements by way of quantum signal processing; implementing, on the quantum computer, a qubitized block encoding of the vibronic Hamiltonian by combining the block encodings by way of linear combination of unitaries; and implementing, on the quantum computer, an exponential of the vibronic Hamiltonian by way of quantum signal processing.

All technical implementation details and advantages described with respect to a particular aspect of the present invention are self-evidently mutatis mutandis applicable for all other aspects of the present invention.

Many further features and combinations thereof concerning the present improvements will appear to those skilled in the art following a reading of the instant disclosure.

## DESCRIPTION OF THE FIGURES

Reference will now be made, by way of example, to the accompanying figures which show example embodiments of the present application, and in which:

FIG. 1 illustrates a simplified block diagram of an example embodiment of a quantum simulation system in accordance with the present disclosure; and

FIG. 2 illustrates a flowchart of a method for vibronic Hamiltonian simulation in accordance with embodiments of the present disclosure.

Like reference numerals are used throughout the figures to denote similar elements and features. While aspects of the invention will be described in conjunction with the illustrated embodiments, it will be understood that it is not intended to limit the invention to such embodiments.

## DETAILED DESCRIPTION

In one exemplary embodiment, a vibronic Hamiltonian of a system, which may be derived classically, is identified and loaded onto or prepared onto one or more quantum computers. The vibronic Hamiltonian may include a kinetic component ($T$) as well as a potential component ($V$). The quantum computer can include one or more qubit registers capable in storing a variety of different qubit types, such as superconducting qubits, photonic qubits, trapped-ion qubits, silicon-based qubits, or neutral atom qubits. These devices apply gates based on, for example, one or more quantum arithmetic operations to the qubits. Subsequent to the identification / loading of the vibronic Hamiltonian onto the quantum computer, a quantum simulation module (implemented in hardware, software, or a combination of both) of the quantum computer can decompose the Hamiltonian into block diagonalizable elements as described herein, and identify / dictate the gate(s) to be implemented on the quantum device accordingly. This foregoing procedure, when implemented as discussed herein, provisions the quantum computer the ability to simulate the vibronic system up to any arbitrary number of diabatic electronic states with increased computational efficiency compared to prior art. According to one or more embodiments set forth herein, the ability to simulate an arbitrary number of electronic states without incurring exponential computational cost would permit simulation of high-order vibronic Hamitonians that better model complex molecular systems with near-term quantum computers.

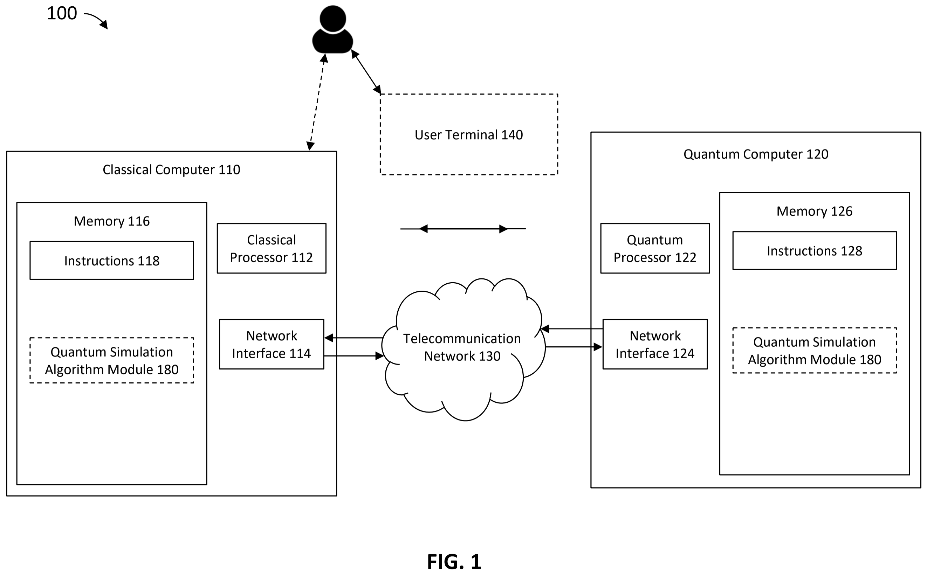

FIG. 1 is a simplified block diagram of an example embodiment of a system 100 capable of simulating vibronic systems in accordance with the present disclosure. As shown, system 100 is hybrid in nature and includes one or more classical computers 110 operably coupled to or in operable communication with one or more quantum computers 120 via a telecommunication network 130.

Each of the classical computer(s) 110 may act as a controller to the quantum computers 120. In some embodiments, the classical computing elements could be implemented as a classical control module within one or more of the quantum computers 120. In FIG. 1, the classical computers 110 may be configured to perform an initialization phase of the simulation as described in more detail herein. In some embodiments, each of the classical computers 110 may be, for example, a desktop terminal, a tablet computer, a notebook computer, a server, a cloud end, or any suitable processing system. Other classical computers suitable for implementing embodiments described in the present disclosure may be used, which may include components different from those discussed below. In some examples, the classical computer 110 may be implemented across more than one physical hardware unit, such as in a parallel computing, distributed computing, virtual server, or cloud computing configuration. Although FIG. 1 shows a single instance of each component of the classical computer 110, there may be multiple instances of each component shown.

As shown in FIG. 1, the classical computer 110 may include one or more classical processors 112, such as a central processing unit (CPU) with hardware accelerator, graphics processing unit (GPU), tensor processing unit (TPU), neural processing unit (NPU), microprocessor, digital signal processor, application-specific integrated circuit (ASIC), field-programmable gate array (FPGA), dedicated logic circuitry, dedicated artificial intelligence processor unit, or combinations thereof.

The one or more classical processors 112 are operably coupled to a network interface 114 for wired or wireless communication with the telecommunication network 130 (e.g., an intranet, the Internet, a P2P network, a Wide Area Network (WAN), and/or a Local Area Network (LAN)) to operably communicate with the quantum computers 120 and one or more optional user terminals 140. The network interface 114 may include wired links (e.g., Ethernet cable) and/or wireless links (e.g., one or more antennas) for intra-network and/or inter-network communications. One or more end users may interact with system 100, for example, by inputting a vibronic Hamiltonian describing a vibronic system through one or more user terminals 140 or, alternatively, inputting directly into the classical computer 110.

The classical computer 110 may also include one or more non-transitory memory(ies) 116 which may include a volatile or non-volatile memory (e.g., a flash memory, a random-access memory (RAM), and/or a read-only memory (ROM)). The non-transitory memory 116 may store instructions 118 for execution by the classical processors 112, for example, instructions to implement/execute a software-based quantum simulation algorithm module 180, in whole or in part, each of which is described in further detail below. Examples of non-transitory computer-readable media include a RAM, a ROM, an erasable programmable ROM (EPROM), an electrically erasable programmable ROM (EEPROM), a flash memory, a CD-ROM, or other portable memory storage.

Each of the quantum computer(s) 120 also includes a quantum processor 122 operably coupled to a memory 126 and a network interface 124 (which is also operably coupled to the memory 116). The memory 126 stores instructions 128 that are executable by the quantum processor 122. The instructions 128 can include, for example, instructions to implement / execute the software-based quantum simulation algorithm module 180, in whole or in part. The quantum computer 120 may be based on a suitable form of physical qubit, including superconducting qubits, photonic qubits, trapped-ion qubits, silicon-based qubits, and neutral atoms. The quantum processor 122 manipulates one of the physical properties of the input state by performing quantum operations such as preparing qubit registers and applying quantum logic gates. The quantum processor 122 may include one or more measurement components (e.g., homodyne detectors) configured to measure the output of the quantum processor 122 and provide information about the quantum result. The quantum computer 120 receives input to a quantum simulation process from classical computer 110 and/or user terminal 140 and returns simulation results.

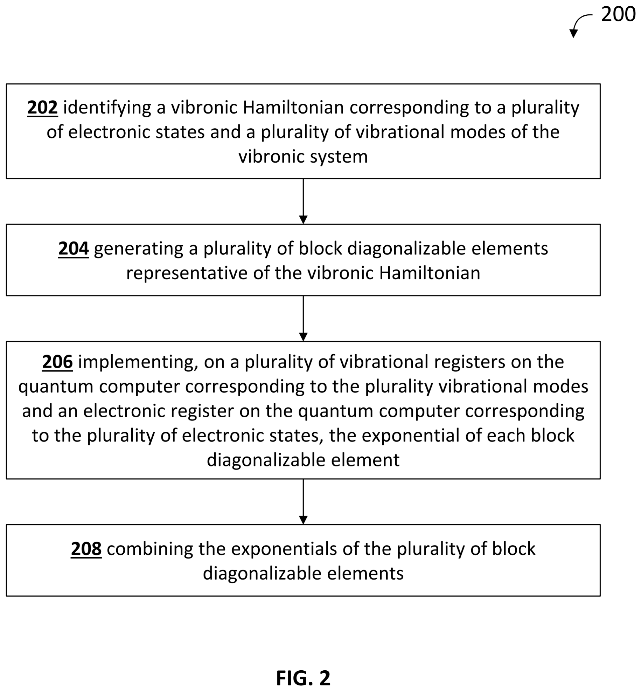

As shown in FIG. 1, the system 100 can be conceptualized as including a quantum simulation algorithm module 180. The quantum simulation algorithm module 180 can be implemented in software, in hardware, or in a combination of software and hardware. The quantum simulation algorithm module 180 may be implemented in full or in part on one or both of the classical computer 110 and quantum computer 120, and hence the module is shown with dotted lines in both computers on FIG. 1. In some implementations, at least steps 206 and 208 of the method flowchart 200 in FIG. 2 are performed on a quantum computer, whereas one or more other steps may be performed on a classical (non-quantum) computer.

METHOD OF IMPLEMENTATION

Example embodiments of implementing time evolution under a vibronic Hamiltonian with $N = 2^n$ electronic states and M vibrational modes each discretized into $K = 2^k$ points will now be described. The Hamiltonian can be written as

$$H = T + V, \tag{4}$$

for

$$T = \mathbf{I}_{\text{el}} \otimes \sum_{n=0}^{M-1} \frac{\omega_n}{2} P_n^2, \qquad V = (\mathbf{I} \otimes V_0) + W' = \sum_{j,k=0}^{N-1} |j\rangle \langle k| \otimes V_{jk} \tag{5}$$

where each $V_{jk}$ is a multi-variate polynomial of position operators

$$V_{jk} = \lambda^{(j,k)} + \sum_{n=0}^{M-1} \alpha_n^{(j,k)} Q_n + \sum_{n,m=0}^{M-1} \beta_{nm}^{(j,k)} Q_n Q_m + \cdots, \tag{6}$$

with $\omega_n/2$'s from $V_0$ being absorbed into $\beta_{nn}^{(j,j)}$'s . We trotterize $e^{iH}$ by writing $V = \sum_{m=0}^{N-1} \tilde{H}_m$ for

$$\tilde{H}_m = \sum_{j=0}^{N-1} |j\rangle \langle m \oplus j| \otimes V_{j,m\oplus j} \tag{7}$$

where $m \oplus j = \sum_{s=0}^{n-1} (m_s \oplus j_s) \cdot 2^s$ is the bitwise XOR product between integers $m = \sum_{s=0}^{n-1} m_s \cdot 2^s$ and $j = \sum_{s=0}^{n-1} j_s \cdot 2^s$ . Writing $\tilde{H}_N = T$ for completeness, we can trotterize $e^{iH}$ as

$$e^{itH} = \lim_{r\to\infty} \left( \prod_{m=0}^{N} e^{it\tilde{H}_m/r} \right)^r. \tag{8}$$

We now describe our algorithm for implementing each $e^{it\tilde{H}_m/r}/r$.

Case $m = 0$: Notice $e^{i\tilde{H}_0} = e^{i \sum_j |j\rangle \langle j| \otimes V_{jj}} = \sum_j |j\rangle \langle j| \otimes e^{iV_{jj}}$ is a sequence of evolutions $e^{iV_{jj}}$ on the vibrational space controlled by the corresponding state $|j\rangle$ in the electronic register. In some embodiments, implementation of this multiplexed evolution would have cost N times that of a controlled $e^{iV_{jj}}$, however, if performed in accordance with examples below not only the controlled version of $e^{iV_{jj}}$ would have the same cost as $e^{iV_{jj}}$ but even the multiplexed evolution $e^{i\tilde{H}_0}$ may essentially have the same cost as a single $e^{iV_{jj}}$. Working in real space, eigenvectors of Q can be taken to be the computational basis states with eigenvalues $Q|x\rangle = (x - K/2)\sqrt{\frac{2\pi}{K}} |x\rangle$ . However, in the $\frac{K}{2}$ -excess signed integer representation of the basis states we simply have

$$Q\,|x\rangle = x_{signed} \cdot \sqrt{\frac{2\pi}{K}}\,|x\rangle. \tag{9}$$

In the signed integer representation $x_{signed}$ will be referred to simply as x. Accordingly, all the arithmetic operations below can correspond to signed arithmetic. Using this we $V_{jj}$ can be presented as a multivariate polynomial of the values stored in each mode's register

$$V_{jj} = \lambda^{(j,j)} + \sum_{n=0}^{M-1} \tilde{\alpha}_n^{(j,j)} x_n + \sum_{n,m=0}^{M-1} \tilde{\beta}_{nm}^{(j,j)} x_n x_m + \cdots \tag{10}$$

Since all terms in $V_{jj}$ commute, $e^{iV_{jj}}$ can be implemented by implementing the exponential of each monomial in the sum. This can be done making use of the phase gradient operation. Applying a phase gradient on a b-qubit register has the effect PhaseGrad $|y\rangle \to e^{i2\pi y/2^b}|y\rangle$. Then for each monomial in the sum, the binary representation of the coefficient can be loaded in one register, the corresponding variable can be computed in another register, and their product can be taken via quantum arithmetic. Then performing a phase gradient on the product register implements the exponential of the term. All intermediary results can then be uncomputed. For example, for degree 1 terms the operation looks like

$$|0\rangle\,|0\rangle\,|x_n\rangle \to |0\rangle\,|\tilde{\alpha}_n\rangle\,|x_n\rangle \to |\tilde{\alpha}_n x_n\rangle\,|\tilde{\alpha}_n\rangle\,|x_n\rangle \xrightarrow{\text{PhaseGrad}} e^{i\tilde{\alpha}_n x_n}|\tilde{\alpha}_n x_n\rangle\,|\tilde{\alpha}_n\rangle\,|x_n\rangle \to e^{i\tilde{\alpha}_n x_n}|0\rangle\,|0\rangle\,|x_n\rangle, \tag{11}$$

while for a degree 2 term we have

$$|0\rangle\,|0\rangle\,|0\rangle\,|x_m\rangle\,|x_n\rangle \to |0\rangle\,\left|\tilde{\beta}_{nm}\right\rangle\,|x_m x_n\rangle\,|x_m\rangle\,|x_n\rangle \xrightarrow{\text{PhaseGrad}} e^{i\tilde{\beta}_{nm} x_n x_m}\left|\tilde{\beta}_{nm} x_m x_n\right\rangle\,\left|\tilde{\beta}_{nm}\right\rangle\,|x_m x_n\rangle\,|x_m\rangle\,|x_n\rangle \tag{12}$$

$$\to e^{i\tilde{\beta}_{nm} x_n x_m}|0\rangle\,|0\rangle\,|0\rangle\,|x_m\rangle\,|x_n\rangle. \tag{13}$$

The big advantage in implementing $e^{iV_{jj}}$ this way is that implementing the multiplexed time evolution $\Sigma_j\,|j\rangle\,\langle j|\otimes e^{iV_{jj}}$ reduces to the multiplexing of the coefficients being loaded which can be done very cheaply. This is because loading coefficients controlled on a single qubit can be done using only Clifford gates (CNOTs), and a multi-control loading can be done by applying a multi-controlled X gate on a clean ancilla, and then using that ancilla to perform a singly controlled loading of the coeffecient followed by another multi-controlled X gate on the ancilla to put it back into a clean state.

Case $0 < m < N$: To implement $e^{iH\tilde{~}m}$ for $0 < m < N$ containing the offdiagonal blocks of V, each $\tilde{H}_m$ can be diagonalized in the electronic subspace and implemente in the same manner as $e^{iH\tilde{~}o}$. For simplicity the coefficients in $V_{jk}$ can be selected to be real, implying $V_{jk} = V_{kj}$, this assumption is not necessary as the algorithm described below can be adapted to the case where $V_{jk} = V_{kj}{}^\dagger$ by separating the Hermitian and anti-Hermitian parts of V. Accordingly:

$$\tilde{H}_m = \frac{1}{2}\sum_{j=0}^{N-1}\left(|j\rangle\,\langle m\oplus j| + |m\oplus j\rangle\,\langle j|\right)\otimes V_{j,m\oplus j}. \tag{14}$$

If m has Hamming weight 1, that is j and $m\oplus j$ only differ in a single bit

$$\tilde{H}_m = \sum_{j'=0}^{N/2-1}\left(|j'0\rangle\,\langle j'1| + |j'1\rangle\,\langle j'0|\right)\otimes V_{(j'0),(j'1)}, \tag{15}$$

$\tilde{H}_m$ can be block-diagonalized by applying a Hadamard on both sides of the corresponding bit

$$\sum_{j'}\left(|j'+\rangle\,\langle j'-| + |j'-\rangle\,\langle j'+|\right)\otimes V_{(j'0),(j'1)} = \sum_{j'}\left(|j'0\rangle\,\langle j'0| - |j'1\rangle\,\langle j'1|\right)\otimes V_{(j'0),(j'1)}. \tag{16}$$

If m has Hamming weight greater than 1, we construct a unitary U such that $U\tilde{H}_m U^\dagger$ has a block structure where the pairs $U|j\rangle\langle m\oplus j|U^\dagger$ only differ in a single bit so $U\tilde{H}_m U^\dagger$ can be block-diagonalized by applying a Hadamard on the corresponding qubit similar to the previous case. Notice how a CNOT gate fixes one of the mismatchings between 2 pairs differing in 2 hits

$$\mathrm{CNOT}\,|b_2 b_1\rangle\,\langle \overline{b_2}\overline{b_1}|\,\mathrm{CNOT} = |b_1 \oplus b_2, b_1\rangle\,\langle \overline{b_1} \oplus \overline{b_2}, \overline{b_1}| \qquad (17)$$

$$= |b_1 \oplus b_2, b_1\rangle\,\langle b_1 \oplus b_2, \overline{b_1}| \qquad (18)$$

Where we've used $b_1 \oplus b_2 = \overline{b_1} \oplus \overline{b_2}$. Hence we construct $U$ by choosing 1 of the bits where $m$ is 1 and using it as a control to apply a CNOT to all other bits where $m$ is 1. Pairs $U|j\rangle \langle m \oplus j|U^\dagger$ will then only differ in the bit that was used as the control. Hence a subsequent Hadamard on the control qubit will block-diagonalize $\tilde{H}_m$.

Case $m = N$: $e^{i\tilde{H}_N}$ is implemented by applying $\exp\left(\frac{i}{2}\sum_{m=0}^{M-1}\omega_m P_m^2\right)$ on the vibrational space which further reduces to applying $\exp\left(\frac{i}{2}\omega_m P_m^2\right)$ to each corresponding mode, where $P_m$ is the momentum operator of the $m^{th}$ mode related to $Q_m$ by

$$P = \mathrm{QFT}^\dagger \cdot (X_{k-1} \otimes I) Q (X_{k-1} \otimes I) \cdot \mathrm{QFT}. \qquad (19)$$

Here $(X_{k-1} \oplus I)$ is an $X$ gate on the most significant qubit. Hence, after diagonalizing via QFT, $\exp\left(\frac{i}{2}\omega_m P_m^2\right)$ can be implemented in a similar manner as $\exp\left(\frac{i}{2}\omega_m Q_m^2\right)$.

COMPLEXITY ANALYSIS

Runtime and space complexity of our algorithms for implementing a single Trotter step in Eq. (8) may now be described. The runtime complexity presented here is based on an optimization via caching. Where instead of uncomputing a monomial after implementing its corresponding term in the polynomial, the monomial is cached to calculate higher degree terms before the uncomputation. The details of the caching algorithm can also be found below.

Theorem 1. *Let $N \in \mathbb{N}^+$ be the number of electronic states, $M \in \mathbb{N}_{>1}$ be the number of vibrational modes, and $K \in \mathbb{N}^+$ be the number of grid points per mode. Define the vibronic Hamiltonian acting on the total space as*

$$H = \mathbf{I}_{el} \otimes \sum_{n=0}^{M-1} \frac{\omega_n}{2} P_n^2 + \sum_{j,k=0}^{N-1} |j\rangle\langle k| \otimes V_{jk},$$

*where each $V_{jk}$ is a d-degree multivariate polynomial of position operators as in Eq. (6) Then a single Trotter step of the form Eq. (8) can be implemented using $\mathcal{O}\left(N\,d\,M^d\,\log^2(K)\right)$ T gates and $\mathcal{O}\left(d^2 \log K\right)$ ancilla qubits.*

Notice that the complexity of the process is highly dependent on the degree of the polynomial in Eq. (6), since a $d$-degree multivariate polynomial over M modes will generally have $\mathcal{O}(M^d)$ terms. In practice $d_n$ is small, often around 2-4. Furthermore, higher degree terms are highly sparse, often restricted to terms involving no more than 2 different modes at a time (e.g. $Q^2 Q_m$). Hence, for practical instances the runtime will be smaller than reflected in the above theorem.

Quantum Signal Processing Based Approach

In Eq. (8) one way of combining the exponentials $e^{i\tilde{H}_m}$ for $0 \le m \le N$ into $e^{i\Sigma_m \tilde{H}_m}$ was presented, via product formulas. However, the exponentials may also be combined into the exponential of the vibronic Hamiltonian via quantum signal processing (QSP). The approach works as follows

(a) Using quantum signal processing, implement a block-encoding of each of the elements $\langle 0|U_m|0\rangle = \tilde{H}_m$ via approximations to the natural log function.

(b) Implement a block encoding of the vibronic Hamiltonian $\langle 0|U_{vib}|0\rangle = H = \sum_m \tilde{H}_m$ by implementing the linear combination of unitaries $\sum_{m=0}^{N} U_m$.

(c) Implement the exponential of the vibronic Hamiltonian by qubitization of $U_{vib}$ and using it as the signal operator in a QSP approximation to the exponential function.

CACHING ALGORITHM

In the approach presented above, a Hamiltonian of the form

$$V_{jj} = \lambda^{(j,j)} + \sum_{n=0}^{M-1} \tilde{\alpha}_n^{(j,j)} x_n + \sum_{n,m=0}^{M-1} \tilde{\beta}_{nm}^{(j,j)} x_n x_m + \sum_{n,m,s=0}^{M-1} \tilde{\phi}_{nms}^{(j,j)} x_n x_m x_s + \cdots, \qquad (20)$$

is exponentiated by exponentiating each term in the sum

$$e^{iV_{jj}} = e^{i\lambda^{(j,j)}} \left( \prod_{n=0}^{M-1} e^{i\tilde{\alpha}_n^{(j,j)} x_n} \right) \left( \prod_{n,m=0}^{M-1} e^{i\tilde{\beta}_{nm}^{(j,j)} x_n x_m} \right) \left( \prod_{n,m,s=0}^{M-1} e^{i\tilde{\phi}_{nms}^{(j,j)} x_n x_m x_s} \right) \cdots. \qquad (21)$$

Exponentiation of each term can involve preparing the corresponding monomial in a register using quantum arithmetic (e.g. for $\beta_{nm}^{(j,j)} x_n x_m$ we prepare the product of registers $n$ and $m|x_n x_m\rangle$). However, in the process of preparing the monomial of a higher degree term, monomial of lower order terms may be prepared prior to taking products (e.g. we prepare $|x_n x_m x_s\rangle$ by first preparing $|x_n x_m\rangle$ and then taking the product with $|x_s\rangle$).Accordingly, the cost of implementation may be reduced for higher degree terms by re-using the computation already performed when implementing the lower degree terms. Furthermore, this can be done at no extra ancilla cost than what is already required to compute the higher degree monomials in the first place. This can be done by utilizing a depth first search approach for the order in which the terms in the sum are exponentiated. The following is an example of what this looks like for the case of d = 3 but the structure holds for a general d.

---

**Algorithm 1 Caching algorithm**

---

```
Implement e^{iλ^(j,j)}
for n = 0 to M − 1 do
    Implement e^{iα̃_n^(j,j) x_n} using |x_n⟩
    for m = 0 to M − 1 do
        if e^{iβ̃_{nm}^(j,j) x_n x_m} has not been implemented then
            Compute |x_n x_m⟩ using |x_n⟩ and |x_m⟩
            Implement e^{iβ̃_{nm}^(j,j) x_n x_m} using |x_n x_m⟩
            for s = 0 to M − 1 do
                if e^{iφ̃_{nms}^(j,j) x_n x_m x_s} has not been implemented then
                    Compute |x_n x_m x_s⟩ using |x_n x_m⟩ and |x_s⟩
                    Implement e^{iφ̃_{nms}^(j,j) x_n x_m x_s} using |x_n x_m x_s⟩
                end if
                Uncompute |x_n x_m x_s⟩
            end for
        end if
        Uncompute |x_n x_m⟩
    end for
end for
```

---

OBSERVABLES OF INTEREST

Relevant observables may be identified for extracting meaningful information from simulations. Key observables of interest in vibronic simulations include electronic state populations, and spectroscopic quantities.

Electronic state populations

In the context of vibronic simulations, electronic state populations describe the probability of finding the system in a particular diabatic electronic state at a given time. For $|\psi(t)\rangle = e^{iHt}|\psi(0)\rangle$, the population of diabatic state $|j\rangle$ at time $t$ is given by

$$p_j(t) = \langle \psi(t)|(|j\rangle\langle j| \otimes \mathbb{I}_{\text{vib}})|\psi(t)\rangle \qquad (22)$$

In our model, estimating eq. 22 simply corresponds to measuring the electronic register in the computational basis and collecting statistics. This requires $\mathcal{O}(\varepsilon^{-2})$ measurements for an $\varepsilon$ accurate estimation of the populations. Alternatively, the quantum amplitude estimation (QAE) algorithm can be employed, which, at the cost of a longer circuit depth, reduces the total runtime to $\mathcal{O}(\varepsilon^{-1})$. However, unlike the measurement-based approach QAE can only estimate the population of one state at a time.

By tracking state populations throughout the simulation, we can calculate transition rates between different states. This enables the study of key physical phenomena such as non-radiative relaxation via intersystem crossing (ISC) and internal conversion (IC), as well as energy transfer mechanisms via electron and charge transport. Studying these phenomena are crucial for uncovering reaction pathways in photochemistry, as well as designing materials for optoelectronic and photovoltaic technologies.

Spectroscopic quantities

Spectroscopic quantities are another fundamental observable in vibronic simulations. Specifically, absorption and emission spectra are readily obtained via a Fourier transform of the dipole autocorrelation function

$$C(\omega) = \frac{1}{2\pi} \int_{-\infty}^{\infty} dt\, e^{-i\omega t} \langle \psi | e^{iHt} \mu e^{-iHt} \mu | \psi \rangle, \qquad (23)$$

provide insights into the interaction of molecules with electromagnetic radiation. $\mu$ here is the dipole moment operator, and $|\psi\rangle$ is the reference state, often taken to be the product of an electronic state with the vibrational ground state, as discussed below.

The absorption and emission spectra are useful for understanding and predicting optical properties such as brightness, color purity, and stability in materials. Recent advancements have provided a framework for efficient extraction of linear and non-linear spectroscopic quantities on a quantum computer when given access to the time-evolution of the system. When combined with our vibronic simulation algorithm, this can guide the design of new materials for optoelectronic devices like organic lasers and light-emitting diodes (OLEDs).

Initial state preparation

Preparing physically relevant initial states can be relevant in extracting useful information from simulations. For vibronic dynamics the initial state often corresponds to the state following a vertical excitation of the system which has a simple product form

$$|\psi(0)\rangle = |j\rangle_{\text{el}} \bigotimes_{r=0}^{M-1} |\chi_0\rangle, \qquad (24)$$

where $|j\rangle_{\text{el}}$ is the corresponding excited electronic state (represented as a computational basis some embodiments), and $|\chi_0\rangle$ is the harmonic oscillator ground state. $|\chi_0\rangle$ corresponds to the discretized Hermite-Gauss function of zeroth order. If each mode is discretized into $K = 2^k$ grid points, $|\chi_0\rangle$ is then the $k$-qubit state

$$|\chi_0\rangle = \frac{1}{Z} \sum_{x=0}^{K-1} \exp\left( \frac{-\pi \cdot \left(x - \frac{K}{2}\right)^2}{K} \right) |x\rangle \qquad (25)$$

where $Z$ is the normalization constant such that $\| |\chi_0\rangle \| = 1$. Methods to prepare Gaussian states are known to persons skilled in the art. Another choice of initial state is to instead of starting in a specific electronic state, we start in a superposition of electronic states. This is especially relevant for absorption/emission spectroscopy where the initial state of the electronic register is the superposition resulting from the electronic ground state being acted upon by the dipole operator $\mu$

$$|\psi(0)\rangle = \frac{\mu|0\rangle_{\text{el}}}{\||\mu|0\rangle\|} \bigotimes_{r=0}^{M-1} |\chi_0\rangle = \left( \sum_{j=0}^{N-1} \mu_{j,0} |j\rangle \right) \bigotimes_{r=0}^{M-1} |\chi_0\rangle, \quad (26, 27)$$

where $\mu_{j,0} = \frac{\langle j | \mu | 0 \rangle}{\||\mu|0\rangle\|}$. Given the product form of the state in eq. 24 and the fact that k will be small in practice, cost of state preparation can be negligible compared to the cost of the simulations.

As can be understood, the examples described above and illustrated are intended to be exemplary only. The scope is indicated by the appended claims.

**Claims**

1. A method for simulating a vibronic system on a quantum computer, the method comprising:

   identifying a vibronic Hamiltonian corresponding to a plurality of electronic states and a plurality of vibrational modes of the vibronic system;

   generating a plurality of block diagonalizable elements representative of the vibronic Hamiltonian;

   implementing, on a plurality of vibronic registers on the quantum computer corresponding to the plurality vibrational modes and an electronic register on the quantum computer corresponding to the plurality of electronic states, the exponential of each block diagonalizable element of the plurality of block diagonalizable elements; and

   combining the exponentials of the plurality of block diagonalizable elements.

2. The method of claim 1, further comprising block diagonalizing each block diagonalizable element of the plurality of block diagonalizable elements thereby producing a plurality of block diagonalized elements, each block diagonalized element of the plurality of block diagonalized elements comprising a plurality of evolutions on the vibronic registers controlled on a state of the electronic register.

3. The method of claim 2, wherein each block diagonalizable element comprises a plurality of terms, each term of the plurality of terms including a plurality of monomials, and the method further comprises:

   implementing, on the plurality of vibronic registers, the exponential of each monomial of the plurality of monomials;

   combining the exponentials of the plurality of monomials to implement the exponential of each corresponding term of the plurality of terms; and

   combining the exponentials of the plurality of terms to implement the exponential of each corresponding block diagonalizable element of the plurality of block diagonalizable elements.

4. The method of claim 3, wherein the implementing of the exponential of each monomial of the plurality of monomials comprises:

   loading a binary representation of a coefficient of the monomial in a first qubit register;

   computing, using quantum arithmetic, a binary representation of a variable of the monomial in a second qubit register;

   applying a phase gradient operation to a product of the first qubit register and the second qubit register; and

   uncomputing the first qubit register and the second qubit register.

5. The method of claim 4, wherein the computing further comprises signed multiplication between a subset of the plurality of vibronic registers, the subset corresponding to vibrational modes of the variable.

6. The method of claim 4 or 5, wherein the loading further comprises controlling based on a state of the electronic register, thereby implementing the plurality of evolutions on the vibronic registers controlled on the state of the electronic register.

7. The method of claim 6, wherein the loading further includes:

   applying a first X gate on a clean ancilla qubit controlled on the state of the electronic register;

   performing the loading controlled on the ancilla qubit; and

   applying a second X gate on the ancilla qubit controlled on the state of the electronic register, thereby returning the ancilla qubit to a clean state.

8. The method of any of claims 4 to 7, wherein the computing further comprises:

   for a variable of order $d$, identifying one or more cache qubit registers storing a variable having an order less than $d$; and

   implementing the variable of order $d$ based on the one or more cache qubit registers.

9. The method of any of claims 2 to 8, wherein the block diagonalizing of each block diagonalizable element is performed exclusively via Clifford gates,

wherein the Clifford gates preferably include one or more of Hadamard gates and CNOT gates.

10. The method of any previous claim, wherein the vibronic Hamiltonian comprises a kinetic component and a potential component, the plurality of block diagonalizable elements further comprising a first subset of the plurality of block diagonalizable elements representative of the kinetic component and a second subset of the plurality of block diagonalizable elements representative of the potential component
and/or wherein the combining includes Trotterizing the exponentials of the plurality of block diagonalizable elements.

11. The method of any previous claim, wherein the combining includes:

constructing block encodings of each element of the plurality of elements by way of quantum signal processing;
implementing, on the quantum computer, a qubitized block encoding of the vibronic Hamiltonian by combining the block encodings by way of linear combination of unitaries; and
implementing, on the quantum computer, an exponential of the vibronic Hamiltonian by way of quantum signal processing.

12. The method of any previous claim, further comprising preparing an initial state of the vibronic system $|\psi(0)\rangle$ in an electronic register, the initial state being a superposition of an electronic ground state being acted upon by a dipole operator.

13. The method of claim 12, further comprising computing a final state of the vibronic system $|\psi(t)\rangle$ including:

- applying the exponentials of the plurality of block diagonalizable elements ($e^{iHt}$);
- determining the final state of the vibronic system $|\psi(t)\rangle$.

14. The method of claim 13 further comprising estimating electronic state population using the initial and final states; and preferably comprising computing an absorption and emission spectrum of the vibronic system using the initial and final states.

15. A non-transitory computer-readable medium storing instructions that, when executed by a computer processor, cause the computer processor to:

identify a vibronic Hamiltonian corresponding to a plurality of electronic states and a plurality of vibrational modes of the vibronic system;
generating a plurality of block diagonalizable elements representative of the vibronic Hamiltonian;
implement, on a plurality of vibronic registers on the quantum computer corresponding to the plurality vibrational modes and an electronic register on the quantum computer corresponding to the plurality of electronic states, the exponential of each block diagonalizable element of the plurality of block diagonalizable elements; and
combine the exponentials of the plurality of block diagonalizable elements.

100

**FIG. 1**

200

**202** identifying a vibronic Hamiltonian corresponding to a plurality of electronic states and a plurality of vibrational modes of the vibronic system

**204** generating a plurality of block diagonalizable elements representative of the vibronic Hamiltonian

**206** implementing, on a plurality of vibrational registers on the quantum computer corresponding to the plurality vibrational modes and an electronic register on the quantum computer corresponding to the plurality of electronic states, the exponential of each block diagonalizable element

**208** combining the exponentials of the plurality of block diagonalizable elements

**FIG. 2**

Europäisches
Patentamt

European
Patent Office

Office européen
des brevets

# EUROPEAN SEARCH REPORT

**Application Number**

EP 25 20 8657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 551 131 B2 (IBM [US]) 10 January 2023 (2023-01-10) | 1,10-15 | INV. G06N10/20 |
| A | * the whole document * | 2-9 | G06N10/60 |
| A | HANS HON SANG CHAN ET AL: "Grid-based methods for chemistry simulations on a quantum computer", ARXIV.ORG, CORNELL UNIVERSITY LIBRARY, 201 OLIN LIBRARY CORNELL UNIVERSITY ITHACA, NY 14853, 17 October 2022 (2022-10-17), XP091344740, DOI: 10.1126/sciadv.abo7484 * Section II. B. Spatial and Temporal Resolution * | 1-15 | |
| A | NICOLAS P D SAWAYA ET AL: "Quantum algorithm for calculating molecular vibronic spectra", ARXIV.ORG, CORNELL UNIVERSITY LIBRARY, 201 OLIN LIBRARY CORNELL UNIVERSITY ITHACA, NY 14853, 26 December 2018 (2018-12-26), XP081453199, DOI: 10.1021/ACS.JPCLETT.9B01117 * the whole document * | 1-15 | |
| A | DIMITAR TRENEV ET AL: "Refining resource estimation for the quantum computation of vibrational molecular spectra through Trotter error analysis", ARXIV.ORG, CORNELL UNIVERSITY LIBRARY, 201 OLIN LIBRARY CORNELL UNIVERSITY ITHACA, NY 14853, 7 November 2023 (2023-11-07), XP091654524, DOI: 10.48550/arXiv.2311.03719 * the whole document * | 1-15 | |

**TECHNICAL FIELDS SEARCHED (IPC)**

G06N

-/--

The present search report has been drawn up for all claims

| Place of search | Date of completion of the search | Examiner |
|---|---|---|
| The Hague | 23 January 2026 | Pijn, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 25 20 8657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUAN SU ET AL: "Fault-Tolerant Quantum Simulations of Chemistry in First Quantization", ARXIV.ORG, CORNELL UNIVERSITY LIBRARY, 201 OLIN LIBRARY CORNELL UNIVERSITY ITHACA, NY 14853, 11 October 2021 (2021-10-11), XP091068351, DOI: 10.1021/ACS.JPCLETT.9B01117 * the whole document * | 1-15 | |
| X,P | DANIAL MOTLAGH ET AL: "Quantum Algorithm for Vibronic Dynamics: Case Study on Singlet Fission Solar Cell Design", ARXIV.ORG, CORNELL UNIVERSITY LIBRARY, 201 OLIN LIBRARY CORNELL UNIVERSITY ITHACA, NY 14853, 20 November 2024 (2024-11-20), XP091929925, DOI: 10.1088/2058-9565/ae0828 * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 23 January 2026 | Pijn, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8657

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2026

| Patent document cited in search report | Publication date | Patent family member(s) | Publication date |
|---|---|---|---|
| US 11551131 B2 | 10-01-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. J. OLLITRAULT et al.** Nonadiabatic Molecular Quantum Dynamics with Quantum Computer. *ar-Xiv:2006.09405*, 2020

- **A. MACRIDIN et al.** Digital Quantum Computation of Fermion-Boson Interacting System. *ar-Xiv:1805.09928*, 2018